(19) Europäisches Patentamt
European Patent Office
Office européen des brevets

(11) EP 2 757 135 B1

(12) EUROPEAN PATENT SPECIFICATION

(45) Date of publication and mention of the grant of the patent:
**29.11.2017 Bulletin 2017/48**

(51) Int Cl.:
*C09J 5/02* (2006.01) *C09J 7/02* (2006.01)

(21) Application number: **13151941.5**

(22) Date of filing: **18.01.2013**

(54) **Method of bonding parts to a vehicle by an acrylic foam tape**

Verfahren zum Kleben von Teilen an ein Fahrzeug mit einem Acrylschaumband

Procédé de collage de pièces à un véhicule par une bande de mousse acrylique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.07.2014 Bulletin 2014/30**

(73) Proprietor: **3M Innovative Properties Company**
**St. Paul, MN 55133-3427 (US)**

(72) Inventors:
- **Eckhardt, Doreen**
  **41453 Neuss (DE)**
- **Paschmann, Volker**
  **41453 Neuss (DE)**
- **Mishra, Gautam**
  **41453 Neuss (DE)**

(74) Representative: **Gabriel, Kiroubagaranne et al**
**3M Belgium B.V.B.A./S.P.R.L.**
**Hermeslaan 7**
**1831 Diegem (BE)**

(56) References cited:
**EP-A2- 0 889 105** **WO-A1-2012/171924**
**JP-A- S61 113 624** **US-A1- 2010 104 864**

- **Automotive, Technisches Datenblatt**
- **3M Acrylic Foam and 3m Acrylic Plus Klebänder**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 757 135 B1

## Description

The present invention relates to a method of bonding parts to a painted surface of a vehicle, in particular motor vehicle. In particular the invention relates to a method in which an adhesive tape having an acrylic foam layer is used. Adhesives and tapes are commonly used to bond two substrates together to form a bonded composite. Particular adhesive tapes include those that have a foam layer. Such tapes or adhesive articles are used for example in the automotive industry where they may be employed to bond various components to the body of a car or other motor vehicle. Typically they are used to bond such parts as emblems, plastic parts as well as rubber gaskets to doors or door frames. Examples of adhesive tapes are disclosed in for example WO 2008/070386, US 6,503,621 and US 4,415,615.

While a vast array of adhesives and tapes are available, advances in substrates and end use requirements continues to drive a need for new adhesive formulations and tape constructions. For example, developments in paints and coatings on automotive parts to which the adhesive tapes are to be bonded have proven to be particularly challenging. Typically, these coatings and paints have low surface energy, requiring the development of special adhesive tapes. For example, WO 2010/101738 discloses an adhesive article comprising a foam layer having a first and second major side, at least one of which has a pressure sensitive adhesive (PSA) associated therewith. The PSA comprises a crosslinked rubber and the foam layer comprises an acrylic polymer obtainable by polymerization of a polymerizable composition comprising one or more alkyl acrylates having an average of 3 to 14 carbon atoms in the alkyl group, one or more polar monomers and one or more multifunctional monomers having at least two free radical polymerizable groups. As taught in this WO publication in the examples, the foam is crosslinked via UV irradiation on the polymer comprising the multifunctional monomer. It is taught in this publication that the adhesive tape provides excellent adhesion performance to automatic paints, in particular a high static and dynamic shear is obtained.

WO 2010/093886 discloses a PSA that includes a graft copolymer and a second hydrocarbon compound. The PSA may be crosslinked and is taught to be designed for adhering to low surface energy materials such as paints and polypropylene.

JP S61 113624A discloses a molding for automobile that can be attached to a nonporous polymeric material, by using a double-sided coated pressure sensitive adhesive tape and a specific primer. EP 0 889 105A2 discloses a kit of parts comprising a structural hybrid pressure-sensitive adhesive tape and a primer. Technical Data Sheet "Automotive, Technisches Datenblatt, 3M™ Haftvermittler, AP111" (published in March 2011) discloses an isopropyl alcohol solution intended to improve adhesion of acrylic foam tapes for automotive applications. UPS 2010/104864-A1 discloses a process for thermal crosslinking of polyacrylates, a crosslinker-accelerator system for such crosslinking, and thermally crosslinking and crosslinked polyacrylates thus prepared. Commercial brochure "3M™ Acrylic Foam und 3M™ Acrylic Plus™ Klebebänder" (published in April 2012) discloses the use of 3M™ Acrylic Foam und 3M™ Acrylic Plus™ adhesive tapes for applications in the automobile industry. WO 2012/171924-A1 discloses the preparation of a double-sided adhesive tape having a thermally crosslinked acrylic foam substrate and two external pressure-sensitive acrylic adhesive layers.

A downside of the above approaches is that the PSA used for adhering to a low energy surface material requires special designing and often include addition of special materials such as for example a graft copolymer as taught in WO 20120/093886 or a block copolymer as taught in WO 2010/101738.

Known alternative approaches to improve the adhesion of a PSA to a low energy surface include the adhesion of a tackifier to the PSA which may however negatively influence the cohesive strength of the PSA. Yet further, the use of polymer primers has been suggested.

Further, there is a continuing trend in the transportation sector and in particular in the automotive industry to further reduce weight of for example cars in order to save on fuel consumption. This trend is leading to use and application of adhesive tapes where they have previously not been used or to the application of tapes in new configurations that are more demanding for example in stress-strain to which the adhesive tape may be subjected. For example, in applications such as applying a rubber gasket to a door and in particular to a door frame, stress-strain is introduced such that the adhesion via a PSA of the rubber gasket to a painted surface becomes even more challenging. Desirably, a further increased shear strength of the adhesive bond is desired. In addition to performance properties, environmental regulations and processing costs also influence product formulation requirements.

It would now be desirable to find further adhesive articles and methods that lead to improved adhesive performance in adhering to low energy surfaces such as for example paint and coating surfaces of automotive parts. It would furthermore be desirable to find methods that are easy and convenient and that can be practiced in an economical and cost effective way. Yet further, it would be desirable to find adhesive articles for use in such method that have good environmental properties. Also, adhesive articles that are compatible with existing manufacturing methods that employ adhesive articles would be desirable.

In accordance with this invention, there is provided a method of adhering a part to a painted surface of a body of a vehicle, the method comprising:

- providing an adhesive tape comprising a foam layer having a thermally cross-linked acrylic polymer and having opposite first and second major sides, wherein the surface of the first major side comprises a pressure sensitive adhesive and the surface at the second major side comprises a further adhesive comprising an adhesive layer comprising a heat activatable adhesive;
- priming the painted surface with a primer comprising a solution of a film forming polymer and or coupling agent in an organic solvent thereby obtaining a primed surface;
- applying the adhesive tape to the primed surface via the pressure sensitive adhesive at the first major side of the adhesive tape; and
- applying a part to the further adhesive at the second major side of the adhesive tape.

It has been found that that the method results in excellent adhesive performance. For example, the method may provide good or excellent adhesive performance to low energy surface, including good 90° peel adhesion performance as well as performance under static and dynamic shear testing. In particular, excellent adhesive performance is achieved on paint surface that have a surface energy of less than 40 mN/m.

The following is a summary of embodiments in accordance with the present invention:

1. Method of adhering a part to a painted surface of a body of a vehicle, the method comprising:

    - providing an adhesive tape comprising a foam layer having a thermally cross-linked acrylic polymer and having opposite first and second major sides, wherein the surface of the first major side comprises a pressure sensitive adhesive and the surface at the second major side comprises a further adhesive comprising an adhesive layer comprising a heat activatable adhesive;
    - priming the painted surface with a primer comprising a solution of a film forming polymer and or coupling agent in an organic solvent thereby obtaining a primed surface;
    - applying the adhesive tape to the primed surface via the pressure sensitive adhesive at the first major side of the adhesive tape; and
    - applying a part to the further adhesive at the second major side of the adhesive tape.

2. Method according to embodiment 1 wherein the surface energy after priming is at least 40 mN/m measured at 23°C.

3. Method according to embodiment 2 wherein the surface energy after priming is at least 44 mN/m.

4. Method according to any of the previous embodiments wherein the primer comprises one or more silane, titanate, aluminium and/or zircoaluminate coupling agents.

5. Method according to any of the previous embodiments wherein the thermally crosslinked acrylic polymer is obtainable by heating a crosslinking composition comprising a crosslinking agent and an acrylic polymer obtainable by polymerization of a polymerizable composition comprising one or more alkyl acrylates having an average of 3 to 14 carbon atoms in the alkyl group and one or more olefinically unsaturated monomers having a functional group capable of reacting with the crosslinking agent.

6. Method according to embodiment 5 wherein the crosslinking agent comprises an epoxy compound.

7. Method according to embodiment 5 or 6 wherein the one or more olefinically unsaturated monomers comprise an olefinic unsaturated monomer having a functional group selected from hydroxyl, carboxyl, sulfonic acid or phosphonic acid groups, amines, acid anhydrides, epoxides and combinations thereof.

8. Method according to any of embodiments 5 to 7 wherein the one or more olefinic unsaturated monomers comprises an acrylic acid.

9. Method according to any of embodiments 5 to 8 wherein the crosslinking composition further comprises an accelerator capable of accelerating the crosslinking reaction of between the acrylic polymer and the crosslinking agent.

10. Method according to any of the previous embodiments wherein the foam layer has a density of at least 540 $kg/m^3$.

11. Method according to any of the previous embodiments wherein the foam layer has a density between 600 $kg/m^3$ and 850 $kg/m^3$.

12. Method according to any of the previous embodiments wherein the foam layer has pressure sensitive adhesive properties, thereby providing a pressure sensitive adhesive on the surface of the first major side of the foam layer.

13. Method according to any of embodiments 1 to 11 wherein the foam layer comprises a pressure sensitive adhesive layer on the first major side, said pressure sensitive adhesive layer comprising an acrylic polymer.

14. Method according to embodiment 13 wherein said acrylic polymer is thermally crosslinked.

15. Method according to any of the previous embodiments wherein said part is applied to said further adhesive of said adhesive tape prior to application of said adhesive tape to the primed surface or after application of adhesive tape to the primed surface.

16. Method according to any of the previous embodiments wherein the part is a rubber seal.

17. A kit comprising (i) an adhesive tape comprising a foam layer having a thermally cross-linked acrylic polymer and having opposite first and second major sides, wherein the surface of the first major side comprises a pressure sensitive adhesive and the surface at the second major side comprises an adhesive layer comprising a heat activatable adhesive and (ii) a primer composition comprising a solution of a film forming polymer and or coupling agent in an organic solvent.

18. A kit according to embodiment 17 wherein the primer composition comprises a one or more silane, titanate, aluminium and/or zircoaluminate coupling agents.

The term "pressure sensitive adhesive" is used to indicate materials (e.g., elastomers) that are either inherently tacky or that have been tackified with the addition of tackifying resins. Pressure sensitive adhesives according to the present invention include those that can be identified by any of the known methods for identifying pressure sensitive adhesives and include in particular those that can be identified by one or more of the following methods.

According to a first method, pressure sensitive adhesives may be defined by the Dahlquist criteria described in Handbook of Pressure Sensitive Adhesive Technology, D. Satas, 2nd ed., page 172 (1989) at use temperatures. This criterion defines a good pressure sensitive adhesive as one having a 1 second creep compliance of greater than 1 x $10^{-7}$ Pa (1 x 10-6 cm2/dyne).

Alternatively, since modulus is, to a first approximation, the inverse of compliance, pressure sensitive adhesives may be defined as adhesives having a modulus of less than (1x $10^{5}$ Pa (1x 106 dynes/cm2).

Another method of identifying a pressure sensitive adhesive is that it is aggressively and permanently tacky at room temperature and firmly adheres to a variety of dissimilar surfaces upon mere contact without the need of more than finger or hand pressure as described in "Glossary of Terms Used in the Pressure Sensitive Tape Industry" provided by the Pressure Sensitive Tape Council, August, 1985.

Another suitable method of identifying a pressure sensitive adhesive is that it preferably has a room temperature storage modulus within the area defined by the following points as plotted on a graph of modulus versus frequency at 25°C: a range of moduli from approximately 2 x $10^{-7}$ to 4 x $10^{-7}$ Pa (2 x 105 to 4 x 105 dynes/cm2) at a frequency of approximately 0.1 radian/second (0.017 Hz), and a range of moduli from approximately 2 x $10^{5}$ to 8 x $10^{5}$ (2 x 106 to 8 x 106 dynes/cm2) at a frequency of approximately 100 radians/second (17 Hz) (for example, see Figure 8-16 on p. 173 Handbook of Pressure Sensitive Adhesive Technology, D. Satas, 2nd ed., (1989)).

ADHESIVE TAPE

The adhesive tape for use in the method of the present application comprises a foam layer of an acrylic polymer that is thermally crosslinked. In a particular embodiment, the thermally crosslinked acrylic polymer is obtainable by heating a crosslinking composition comprising a crosslinking agent and an acrylic polymer obtainable by polymerization of a polymerizable composition comprising one or more alkyl acrylates having an average of 3 to 14 carbon atoms in the alkyl group and one or more olefinically unsaturated monomers having a functional group capable of reacting with the crosslinking agent. Suitable crosslinking agents include those that under application of heat cause reaction with the acrylic polymer (through the functional groups contained therein). Suitable crosslinking agents include isocyanates, for example trimerized isocyanates and/or sterically hindered isocyanates that are free of blocking agents and epoxide compounds such. In order to attenuate the reactivity of the isocyanates and to extend the potlife during extrusion, it may be advantageous to use isocyanates blocked with functional groups that can be eliminated thermally. For blocking it is preferred to use, for example, aliphatic primary and secondary alcohols, phenol derivatives, aliphatic primary and secondary amines, lactams, lactones, and malonic esters.

A further class of crosslinking agents that may be used include oxazolines. Suitables oxazolines include polyfunctional oxazolines, in other words those that contain at least two oxazoline units per molecule. The oxazoline compound may be aromatic of aliphatic. Examples includes polyfunctional oxazolines such as ortho-, meta- or para-substituted phenylenebisoxazolines, 2,6-bis(2-oxazolin-2-yl)pyridine (and also derivatives with alkyl or aryl substituents on the oxazoline ring), 2,6-bis(8H-indeno[1,2-d]oxazolin-2-yl)pyridine, 1,2-bis(4,4-dimethyl-2-oxazolin-2-yl)ethane (and also derivatives with alkyl or aryl substituents on the oxazoline ring), 2,2-isopropylidenebis-2-oxazoline (and also derivatives with alkyl or aryl substituents on the oxazoline ring) and also block copolymers consisting of at least two units of $\alpha$-methylvinyl-2-oxazoline such as, for example, Epocros™ RPS-1005 from Nippon Shokubai.

Epoxide compounds for use as crosslinking agent include substances that contain epoxide groups, and in particular, polyfunctional epoxides, in other words those, which contain at least two epoxide units per molecule (i.e. are at least difunctional). They may be both aromatic and aliphatic compounds. Outstandingly suitable polyfunctional epoxides are oligomers of epichlorohydrin, epoxy ethers of polyhydric al-cohols (especially ethylene, propylene and butylene glycols, polyglycols, thiodiglycols, glycerol, pentaerythritol, sorbitol, polyvinyl alcohol, polyallyl alcohol), epoxy ethers of polyhydric phenols (in particular resorcinol, hydroquinone, bis(4-hydroxyphenyl)methane, bis(4-hydroxy-3-methylpheny-1)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane,
2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dichlorophenyl)propane, bis(4-hydroxyphenyl)phenylmethane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichlorothane, bis(4-hydroxyphenyl)-(4-chlorophenyl)me¬thane, 1,1-bis(4-hydroxyphenyl)cyclohexane, bis(4-hydroxyphenyl)cyclohexylmethane, 4,4'-di-hydroxybiphenyl, 2,2'dihydroxybiphenyl, 4,4'-dihydroxydiphenyl sulphone) and also their hydroxyethyl ethers, phenol-formaldehyde condensation products, such as phenol alcohols, phenol-aldehyde resins, S- and N-containing epoxides (for example N,N-diglycidylaniline, N,N'-dimethyldiglycidyl-4,4-diaminodiphenylmethane) and also epoxides which have been prepared by standard methods from polyunsaturated carboxylic acids or monounsaturated carboxylic acid residues of unsaturated alcohols, glycidyl esters. Polyglycidyl esters which can be obtained by polymerizing or copolymerizing glycidyl esters of unsaturated acids or are obtainable from other acidic compounds (cyanuric acid, diglycidyl sulphide, cyclic trimethylene trisulphone and/or their derivatives and others).

Examples of suitable ethers are 1,4-butanediol diglycidyl ether, polyglycerol-3 glycidyl ether, cyclohexanedimethanol diglycidyl ether, glycerol triglycidyl ether, neopentylglycol diglycidyl ether, pentaerythritol tetraglycidyl ether, 1 ,6-hexanediol diglycidyl ether, polypropylene glycol diglycidyl ethers, trimethylolpropane triglycidyl ether, bisphenol A diglycidyl ether and bisphenol-F diglycidyl ether. In a particular embodiment, the crosslinking agent is an epoxycyclohexyl derivative including in particular epoxycyclohexyl carboxylates such as (3,4-epoxycyclohexane)methyl 3,4-epoxycyclohexylcarboxylate (CAS 2386-87-0).

In a particular embodiment, the crosslinking agent may be used in combination with an accelerator. By "accelerator" is meant a compound that affects the speed of the crosslinking reaction or in other words that increases the speed of the crosslinking reaction compared to a composition that does not include the accelerator. Accelerators for use with an oxazoline crosslinking agent include for example a lewis acid or a bronsted acid. Mineral acids as well as organic acids may be used. In a particular embodiment, the accelerator may include acid groups that may be contained in the acrylic polymer. Accordingly, in a particular embodiment where the acid group in the acrylic polymer is a carboxylic acid, the acid may be used as accelerator and at the same time react with the oxazoline crosslinking agent.

Where the crosslinking agent is an epoxide, accelerators that can be used include proton acceptors, electron pair donors (lewis bases) and/or electron pair acceptors (Lewis acids). In a particular embodiment, the accelerator used in combination with an epoxide comprises an amine, including polyfunctional amines. In a particular embodiment, the amine may be converted into its corresponding salt by for example a volatile organic or inorganic acid. Further suitable crosslinkers and crosslinking systems that may be used in conjunction with the present application are disclosed in EP 752 435, EP 1 802 722, EP 1 791 921, EP 1 791 922 , EP 1 978 069 and DE 2008 059 050.

Examples of alkyl acrylates for use in making the acrylic polymer include acrylic and methacrylic esters with alkyl groups having of 4 to 14 C atoms, for example 4 to 9 C atoms. The alkyl group may be linear or branched or may be cyclic or a combination thereof. In a particular embodiment, the alkyl acrylate will include at least one or more alkyl acryates having linear or branched alkyl groups. Examples of monomers of this kind that may be used include n-butyl acrylate, n-butyl methacrylate, sec-butyl acrylate, tert-butyl acrylate, n-pentyl acrylate, n-pentyl methacrylate, n-amyl acrylate, n-hexyl acrylate, hexyl methacrylate, n-heptyl acrylate, n-octyl acrylate, n-octyl methacrylate, n-nonyl acrylate, isobutyl acrylate, isobornyl acrylate, isobornyl methacrylate, dodecyl methacrylate, isodecyl acrylate, lauryl acrylate, n-undecyl acrylate, cyclohexyl methacrylate, cyclopentyl methacrylate, 3,3,5-trimethylcyclohexyl acrylate, stearyl acrylate, tridecyl acrylate, isooctyl acrylate, isooctyl methacrylate, and their branched isomers, such as 2-ethylhexyl acrylate and 2-ethylhexyl methacrylate.

The polymerizable composition from which the acrylic polymer may be prepared should further include one or

more olefinically unsaturated monomers having a functional group capable of reacting with the crosslinking agent. Suitable functional groups may include hydroxyl, carboyl, sulfonic acid or phosphonic acid groups, acid anhydrides, epoxides and amines. Examples of olefinically unsaturated monomers having a functional group that may be used in connection with this application include monomers having one or more acid groups including carboxylic acid groups such as acrylic acid, methacrylic acid, itaconic acid, maleic acid, fumaric acid, crotonic acid, aconitic acid, dimethylacrylic acid, .beta.-acryloyloxypropionic acid, trichloracrylic acid, vinylacetic acid, vinylphosphonic acid, itaconic acid, amino functionalized monomers such as diethylaminoethyl acrylate, diethylaminoethyl methacrylate, dimethylaminoethyl acrylate and dimethylaminoethyl methacrylate. Further monomers that may be used include hydroxyl functionalized monomers such as hydroxyethyl acrylate, hydroxypropyl acrylate, hydroxyethyl methacrylate, hydroxypropyl methacrylate, 6-hydroxyhexyl methacrylate, allyl alcohol, epoxy functionalized monomers glycidyl acrylate or glycidyl methacrylate and maleic anhydride.

In a particular embodiment, the acrylic polymer may include units derived from further monomers copolymerizable with the above listed monomers and that may be used for example to adjust the properties of the PSA as desired. Examples of further optional monomers that can be used in particular embodiments include methyl acrylate, ethyl acrylate, methyl methacrylate, ethyl methacrylate, benzyl acrylate, benzyl methacrylate, phenyl acrylate, phenyl methacrylate, t-butylphenyl acrylate, t-butylphenyl methacrylate, behenyl acrylate, phenoxyethyl acrylate, phenoxyethyl methacrylate, 2-butoxyethyl methacrylate, 2-butoxyethyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofurfuryl acrylate, diethylaminoethyl acrylate, diethylaminoethyl methacrylate, dimethylaminoethyl acrylate, dimethylaminoethyl methacrylate, 2-butoxyethyl acrylate, 2-butoxyethyl methacrylate, methyl 3-methoxyacrylate, 3-methoxybutyl acrylate, phenoxyethyl acrylate, phenoxyethyl methacrylate, 2-phenoxyethyl methacrylate, butyldiglycol methacrylate, ethylene glycol acrylate, ethylene glycol monomethylacrylate, methoxy polyethylene glycol methacrylate 350, methoxy polyethylene glycol methacrylate 500, propylene glycol monomethacrylate, butoxydiethylene glycol methacrylate, ethoxytriethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-methylundecyl)acrylamide, N-(n-butoxymethyl)acrylamide, N-(butoxymethyl)methacrylamide, N-(ethoxymethyl)acrylamide, N-(n-octadecyl)acrylamide, and also N,N-dialkyl-substituted amides, such as, for example, N,N-dimethylacrylamide, N,N-dimethylmethacrylamide, N-benzylacrylamide, N-isopropylacrylamide, N-tert-butylacrylamide, N-tert-octylacrylamide, N-methylolacrylamide, N-methylolmethacrylamide, acrylonitrile, methacrylonitrile, vinyl ethers, such as vinyl methyl ether, ethyl vinyl ether, vinyl isobutyl ether, vinyl esters, such as vinyl acetate, vinyl chloride, vinyl halides, vinylidene chloride, vinylidene halides, vinylpyridine, 4-vinylpyridine, N-vinylphthalimide, N-vinyllactam, N-vinylpyrrolidone, styrene, a- and p-methylstyrene, a-butylstyrene, 4-n-butylstyrene, 4-n-decylstyrene, 3,4-dimethoxystyrene, macromonomers such as 2-polystyrene-ethyl methacrylate (molecular weight Mw from 4000 to 13 000 g/mol), poly(methyl methacrylate)-ethyl methacrylate (Mw from 2000 to 8000 g/mol).

The acrylic polymer can be prepared by the commonly known methods to a including for example free-radical polymerizations. The acrylic polymers can be prepared by copolymerizing the monomeric components using the typical addition-polymerization initiators and also, where appropriate, regulators, with polymerization taking place at the usual temperatures in bulk, in emulsion, for example in water or liquid hydrocarbons, or in solution. The acrylic polymers are in a particular embodiment prepared by addition polymerization of the monomers in solvents, more particularly in solvents with a boiling range from 50 to 150°C., for example from 60 to 120°C., using the customary amounts of addition-polymerization initiators, generally 0.01% to 5%, more particularly 0.1% to 2% by weight (based on the total weight of the monomers).

Any initiator suitable for initiating polymerization of acrylates may be used. Examples of free-radical sources are peroxides, hydroperoxides and azo compounds, examples being dibenzoyl peroxide, cumene hydroperoxide, cyclohexanone peroxide, di-tert-butyl peroxide, cyclohexylsulphonyl acetyl peroxide, diisopropyl percarbonate, tert-butyl peroctoate, benzpinacol. In one very preferred procedure the free-radical initiator used is 2,2'-azobis(2-methylbutyronitrile) (Vazo 67™ from DUPONT) or 2,2'-azobis(2-methylpropionitrile) (2,2'-azobisisobutyronitrile; AIBN; Vazo 64™ from DUPONT).

Suitable solvents include alcohols, such as methanol, ethanol, n- and iso-propanol, n- and iso-butanol, preferably isopropanol and/or isobutanol; and also hydrocarbons such as toluene and, in particular benzines with a boiling range from 60 to 120°C. In particular it is possible to use ketones, such as acetone, methyl ethyl ketone, methyl isobutyl ketone, and esters, such as ethyl acetate, and also mixtures of solvents of the stated kind, preference being given to mixtures comprising isopropanol, more particularly in amounts from 2% to 15% by weight, preferably 3% to 10% by weight, based on the solvent mixture employed.

The weight-average molecular weights of the acrylic polymer may vary widele and may be in a particular

embodiment be in a range from 50 000 to 2 000 000 g/mol; for example in a range from 100 000 to 1 000 000 g/mol, or in a range from 150 000 to 500 000 g/mol [the figures for average molecular weight $M_w$ and the polydispersity PD in this specification relate to the determination by gel permeation chromatography]. For this purpose it may be advantageous to carry out the addition polymerization in the presence of suitable addition-polymerization regulators such as thiols, halogen compounds and/or alcohols, in order to set the desired average molecular weight.

In a particular embodiment, the acrylic polymer will have a narrow molecular weight distribution (polydispersity PD<4). Acrylic polymers with a narrow distribution can be prepared advantageously by anionic addition polymerization or by controlled free-radical addition polymerization methods, the latter being particularly suitable. Examples of acrylic polymers of this kind which are prepared by the RAFT process are described in U.S. Pat. No. 6,765,078 B2 and U.S. Pat. No. 6,720,399 B2. Via N-oxyls as well it is possible to prepare such acrylic polymers, as described for example in EP 1 311 555 B1. Atom transfer radical polymerization (ATRP) as well can be used advantageously for the synthesis of acrylic polymers with a narrow distribution, the initiator used being preferably monofunctional or difunctional secondary or tertiary halides and, to abstract the halide(s), complexes of Cu, Ni, Fe, Pd, Pt, Ru, Os, Rh, Co, Ir, Ag or Au (cf., for example, EP 0 824 111 A1; EP 826 698 A1; EP 824 110 A1; EP 841 346 A1; EP 850 957 A1). The various possibilities of ATRP are further described in specifications U.S. Pat. No. 5,945,491 A, U.S. Pat. No. 5,854,364 A and U.S. Pat. No. 5,789,487 A.

The acrylic polymer in a particular embodiment can be admixed, prior to thermal crosslinking, with at least one tackifying resin. Tackifying resins for addition are the tackifier resins that are already known and are described in the literature. Reference may be made in particular to all aliphatic, aromatic, alkylaromatic hydrocarbon resins, hydrocarbon resins based on pure monomers, hydrogenated hydrocarbon resins, functional hydrocarbon resins and natural resins. With preference it is possible to use pinene resins, indene resins and rosins, their disproportionated, hydrogated, polymerized and esterified derivatives and salts, terpene resins and terpene-phenolic resins, and also C5, C9 and other hydrocarbon resins. Combinations of these and further resins may also be used with advantage in order to set the properties of the resultant adhesive in accordance with what is desired. With particular preference it is possible to employ all resins that are compatible (soluble) with the polyacrylate in question. In a particular embodiment terpene-phenolic resins and/or rosin esters are used.

Further optional components that may be used include powderous and granular fillers, dyes and pigments, including in particular those which are abrasive and reinforcing, such as, for example, chalks ($CaCO_3$), titanium dioxides, zinc oxides and carbon blacks, even in high fractions, in other words from 1% to 50% by weight, based on the overall formula, to be metered outstandingly into the acrylic polymer melt.

It is possible, furthermore, for low-flammability fillers, such as ammonium polyphosphate, for example, and also electrically conductive fillers (such as, for example, conductive carbon black, carbon fibres and/or silver-coated beads), and also thermally conductive materials (such as, for example, boron nitride, aluminium oxide, sodium carbide), and also ferromagnetic additives (such as, for example, iron(III) oxides), and also organic and/or inorganic colorants (in the form of pastes, compounded formulations or pigments), ageing inhibitors, light stabilizers, ozone protectants, compounding agents and/or expandants, to be added or compounded in before or after the concentration of the polyacrylate.

Optionally plasticizers (plasticizing agents) can be added, more particularly at concentrations of up to 5% by weight. Plasticizers which can be metered in include, for example, low molecular mass polyacrylates, phthalates, water-soluble plasticizers, plasticizer resins, phosphates, polyphosphates and/or citrates.

In addition, optionally, it is possible for the thermally crosslinkable acrylic polymer to be mixed or blended with other polymers. Suitable for this purpose are polymers based on natural rubber, synthetic rubber, EVA, silicone rubber, acrylic rubber, polyvinyl ether. In this context it proves to be advantageous to add these polymers in granulated or otherwise-comminuted form to the acrylic polymer melt prior to the addition of the thermal crosslinker. The polymer blend is produced in an extruder, preferably in a multi-screw extruder or in a planetary roller mixer.

In one embodiment, the foam layer may be obtained and produced according to the methods described in US 4,415,615. The process typically comprises frothing the polymerizable composition, coating the froth on a backing such as for example a release liner and polymerizing the polymerizable composition.

Frothing is conveniently accomplished by whipping a gas into the polymerizable composition. Useful frothing gases typically are inert and include nitrogen gas or carbon dioxide. In a particular embodiment, the monomers of the polymerizable composition may be partially polymerized prior to frothing so as to achieve a desirable viscosity for the frothing step. Useful viscosities to froth a composition are typically between 1000 and 40,0000 cps. The viscosity is typically selected so as to achieve a desired cell uniformity. For example, above 5000 cps, higher cell uniformity will typically be obtained.

Additionally and alternatively to using prepolymerization to achieve a desired viscosity, a thixotropic agent such as fumed silica may be used. In such case, polymerization may be carried out in one step. Subsequent to frothing and polymerization, the composition may be crosslinked to obtained a foam layer having a crosslinked acrylic polymer.

In addition to or alternative to the use of frothing to obtain a foam layer, hollow microspheres may be included in the polymerizable composition. The microspheres may include expandable and non-expandable microspheres. Expandable microspheres (hereinafter also called microballoons) are spheres that expand upon heating and include in particular expandable polymeric microspheres that include a polymer shell and a core material in the form of a gas, liquid or combination thereof that expands upon heating. An expandable microsphere is one where the shell can initially be expanded or further expanded without breaking.

Microballoons or microspheres are approximately spherical hollow bodies having an elastic and thermoplastic polymer shell, accordingly, they are also referred to as expandable polymeric microspheres or as hollow microbeads. Microballoons are filled with low-boiling liquids or with liquefied gas. Shell materials used include more particularly polyacrylonitrile, polyvinyl dichloride (PVDC), polyvinyl chloride (PVC), polyamides or polyacrylates. Suitable low-boiling liquids are, more particularly, hydrocarbons of the lower alkanes, for example isobutane or isopentane, which are enclosed as liquefied gas under pressure in the polymer shell.

Action on the microballoons - more particularly by supply of heat or generation of heat, as for example by ultrasound or microwave radiation - causes, first, a softening of the outer polymer shell, while at the same time the liquid blowing gas present in the shell undergoes transitions of its gaseous state. At a particular pairing of pressure and temperature, identified for the purposes of this specification as the critical pairing, the microballoons undergo irreversible expansion, and expand three-dimensionally. The expansion is at an end when the internal pressure equals the external pressure. Since the polymeric shell is maintained, a closed-celled foam is achieved in this way.

A large number of types of microballoons are available commercially, such as, for example, from Akzo Nobel, the Expancel DU products (dry unexpanded), which differ essentially in their size (6 to 45 $\mu$m in diameter in the unexpanded state) and in the starting temperature they require for expansion (75° C. to 220° C.).

Furthermore, unexpanded types of microballoons are also available in the form of an aqueous dispersion, with a solids fraction or microballoon fraction of around 40% to 45% by weight, and also in the form of polymer-bound microballoons (masterbatches), for example in ethylene-vinyl acetate, with a microballoon concentration of around 65% by weight. Obtainable, furthermore, are what are called microballoon slurry systems, in which the microballoons are present in the form of an aqueous dispersion with a solids fraction of 60% to 80% by weight. The microballoon dispersions, the microballoon slurries, and the masterbatches, like the DU products, are suitable for the foaming of acrylic tapes in accordance with the process of the invention.

Methods for making a foamed layer using expandable microspheres are disclosed in WO 00/006637 and US 2011/0281964 A1. Examples of suitable expandable microspheres include those commercially available from Pierce Stevens (Buffalo, NY) under designations F30D, D80SD and F100D. Further useful expandable microspheres include Expancel 551, Expancel 461 and Expancel 091, available from Akzo Nobel. Each of these microspheres has an acrylonitrile-containing shell. The non-expandable microspheres may be polymeric or non-polymeric. Particularly suitable non-expandable microspheres include hollow glass bubbles.

Regardless of the process by which the foam of the adhesive tape is created, it is preferred to include a surfactant in the composition, preferably a silicone or fluorochemical known to be useful for foaming organic liquids that have low surface tension.

By doing so, foams with cellular structure of good uniformity can be produced wherein the cells have an average diameter within the range of 0.05 to 0.3 mm. Typically, 90% of the cells of the adhesive membrane vary in size no more than 2:1, but some of the adhesive membranes have been characterized by significant variations in cell size.

As a further method of producing a foam layer of the acrylic polymer, the compounds of the crosslinkable composition may be blended together in a compounder or extruder where the crosslinkable composition will exist in the form of a melt. To this may be added microballoons or expandable microspheres as disclosed above. Where expandable microspheres are used, they may be expanded by application of heat in the extruder or subsequent to coating from the extruder.

A further particular method for making a foam layer is disclosed in US 2012/0029105. In this method, the crosslinkable composition if foamed in a first step at a first temperature and then the crosslinking system or components thereof are added at a second temperature which is lower than the first temperature. Crosslinking may then be carried out subsequent to forming of the layer by extruding the layer onto a desired carrier.

The foam layer should in a particular embodiment have a density of at least 150 kg/m3 or at least 300 kg/$m^3$ or at least 540 kg/$m^3$, typically at least 570 kg/$m^3$ or at least 600 kg/$m^3$. Generally, a higher density has been found to improve the performance of the adhesive tape when applied to door frames and in particular, the adhesion at areas of strong curvature may be improved. However, the density should not be so high that the foam layer loses its foam characteristics. Typically, the maximum density should not exceed 950 kg/$m^3$, or in a particular embodiment should not exceed 850 kg/$m^3$. The desired density can be obtained by the level of frothing and/or amount of hollow microspheres that is included in the composition for the foam layer.

The thickness of the foam layer may vary widely but is in a particular embodiment at least 0.1mm, for example at least 0.3mm or at least 0.5 mm. In one particular embodiment, the thickness may be in a range of 1 to 8mm, for example between 1 and 6mm or between 1 and 4 mm or between 1.5 and 3mm.

In a particular embodiment, the foam layer may be designed to have pressure sensitive adhesive properties,

for example through the use of tackifiers as disclosed above. In such case, the opposite major sides will have a pressure sensitive adhesive surface.

In an alternative embodiment, a pressure sensitive adhesive layer may be provided on the first major side. In general, any of the type of pressure sensitive adhesives as disclosed in the Handbook of Pressure Sensitive Adhesive Technology, D. Satas, 2nd ed., (1989) may be used in the pressure sensitive adhesive layer. However, in a particular preferred embodiment, a pressure sensitive adhesive layer will include one or more acrylic polymer, including any of the acrylic polymers disclosed above in connection with the foam layer. The thickness of the pressure sensitive adhesive layer may vary widely but can be for example at least 10 micrometer, for example at least 20 micrometer or at least 30 micrometer. A particular range may be from 15 micrometer to 80 micrometer.

In a particular embodiment, the adhesive tape comprises a foam layer having a thermally crosslinked acrylic polymer whereby the acrylic polymer is obtainable from a mixture of ethylhexylacrylate and/or butyl acrylate, methyl acrylate and acrylic acid and the foam layer has on the first major side a pressure sensitive adhesive layer comprising an acrylic polymer obtainable from a polymerization of a mixture of ethylhexylacrylate and/or butyl acrylate, and acrylic acid. In a particular embodiment, the acrylic polymer in the pressure sensitive adhesive layer is thermally crosslinked using in particular an epoxycyclohexyl derivative. Typically, the crosslinking will be carried out in the absence of added accelerators for accelerating the epoxy crosslinking reaction. While to some extent the acrylic acid in the acrylic polymer may be serving as an accelerator, the meaning of "absence of added accelerator" should be understood to mean that no separate accelerators have been added to the composition.

In a particular embodiment, the foam layer comprises an acrylic polymer from a mixture of 65 to 97 % by weight (based on the total weight of the monomer mixture) of ethylhexylacrylate and/or butyl acrylate, 0 to 30 % by weight (based on the total weight of the monomer mixture) of methyl acrylate and 3 to 15% by weight (based on the total weight of the monomer mixture) of acrylic acid and the foam layer has on the first major side a pressure sensitive adhesive layer comprising an acrylic polymer obtainable from a polymerization of a mixture of 85 to 95% by weight (based on the total weight of the monomer mixture) of ethylhexylacrylate and/or butyl acrylate, and 5 to 15% by weight (based on the total weight of the monomer mixture) of acrylic acid whereby the acrylic polymer in the pressure sensitive adhesive layer is thermally crosslinked using in particular an epoxycyclohexyl derivative, conveniently without addition of an accelerator for an epoxy curing reaction. In a particular embodiment, the acrylic foam layer is crosslinked by an epoxycyclohexyl derivative.

The adhesive tape comprises a foam layer comprising a thermally cross-linked acrylic polymer and having opposite first and second major sides, whereby the first major side comprises a pressure sensitive adhesive. The pressure sensitive adhesive may have an acrylic polymer that is thermally crosslinked with an epoxy compound such as for example an epoxycyclohexyl derivative preferably in the absence of added accelerators for an epoxy curing reaction.

The adhesive tape comprises a foam layer comprising a thermally cross-linked acrylic polymer and having opposite first and second major sides, whereby the first major side comprises a pressure sensitive adhesive, for example as described in the preceding paragraph. The second major side comprises a heat activatable adhesive, i.e. an adhesive that requires heating for developing the desired bond strength. Suitable heat-activatable adhesive are disclosed in for example

EP 1 037 952. The heat-activatable adhesive materials useful for the preparation of a heat-activatable adhesive layer include essentially non-polar and/or partially polar heat-activatable adhesive materials.

Essentially non-polar heat-activatable adhesive materials include polyolefin homopolymers or co-polymers of essentially non-polar comonomers. Examples of polyolefin homopolymers include, for example, polyethylene, polypropylene, polyisobutylene, or polybutadiene. Examples of essentially non-polar copolymers include, for example, ethylene-propylene copolymers (EPM), ethylene-propylene-diene terpolymers (EPDM), or styrene-butadiene copolymers having various ratios. Examples of essentially non-polar copolymers furthermore are thermoplastic olefin (TPO) elastomers which often are blends of EPM and/or EPDM with polypropylene or polyethylene.

Partially polar heat-activatable adhesive materials may be based on polyolefin homopolymers or copolymers of essentially non-polar comonomers additionally comprising one or more polar comonomers. The term polar comonomers includes both moderately polar and strongly polar comonomers with strongly polar comonomers being preferred. Polarity (that is, hydrogen-bonding ability) is frequently described by the use of terms such as 'strongly', 'moderately', and 'poorly'. References describing these and other solubility terms include 'Solvents', Paint Testing Manual, 3rd ed., G.G. Seward, ed., American society for Testing and Materials, Philadelphia, PA, and 'A Three-DimensionalApproach to Solubility', Journal of Paint Technology, vol. 38, no. 496, pp. 269-280. Polar comonomers useful in the present application, conveniently exhibit at least one carboxylic acid and/or carboxylate group and, in particular, at least one (meth)acrylic acid and/or (meth)acrylate group, and/or at least one halogen atom. Typical polar comonomers are acrylic acid, methacrylic acid, and esters thereof. Examples of partially polar heat-activatable adhesives include ethylene-acrylic acid, propylene acrylic-acid, and isobutylene-acrylic acid copolymers having various ratios, blends of polyethylene and ethylene vinyl acetate and halogenated polyolefins.

The thickness of the heat-activatable adhesive layer in one embodiment is at least 25 micrometers, for example

at least 50 micrometers and specifically between 25 - 150 micrometers. Useful heat-activatable adhesives include Primacor™3330, available from Dow Chemical; Polybond™ 1 001, available from BP Performance Polymers; and dynamically vulcanized polyolefins available from Monsanto Chemical Company under the name Santoprene™, for example, Santoprene™201-73. In a particular embodiment, the heat-activatable adhesive is an ethylene propylene copolymer also referred to as a polyallomer. Polyallomers are available commercially from various sources such as Eastman Chemicals and Scholler Technical Papers.

In a particular embodiment, the heat activable layer of an adhesive tape as described above is used in heat lamination bonding to a rubber seal. Accordingly, there is obtained an article that comprises an adhesive tape having foam layer comprising a thermally cross-linked acrylic polymer (in particular such as described above) and having opposite first and second major sides, wherein the surface of the first major side comprises a pressure sensitive adhesive and the second major side comprises a further adhesive layer having a heat-activable adhesive (such as described above) whereby the further adhesive layer bonds the adhesive tape to the rubber seal. In a particular aspect of this embodiment, the first major side of the adhesive tape of the article comprises a pressure sensitive adhesive layer of an acrylic polymer, preferably a thermally cross-linked acrylic polymer. For example the acrylic polymer in the PSA layer may be crosslinked with an epoxy compound in particular an epoxycyclohexyl derivative, conveniently without addition of an accelerator for an epoxy curing reaction. An article of this type is particularly suitable for use in connection with the present method using a priming step to bond the article to a door or door frame to provide a rubber seal thereon. Such applications are highly demanding, in particular because of the stress-strain they introduce into the adhesive tape of the article, which may often lead to bond failure. The article described in this embodiment may be particularly suitable for use in the present method.

In a particular variant of this embodiment, the adhesive tape comprises a foam layer having a thermally crosslinked acrylic polymer whereby the acrylic polymer is obtainable from a mixture of ethylhexylacrylate and/or butyl acrylate, methyl acrylate and acrylic acid and the foam layer has on the first major side a pressure sensitive adhesive layer comprising an acrylic polymer obtainable from a polymerization of a mixture of ethylhexylacrylate and/or butyl acrylate, and acrylic acid. In a particular embodiment, the acrylic polymer in the pressure sensitive adhesive layer is thermally crosslinked using in particular an epoxycyclohexyl derivative. Typically, the crosslinking will be carried out in the absence of added accelerators for accelerating the epoxy crosslinking reaction. For example, the foam layer comprises an acrylic polymer from a mixture of 65 to 97 % by weight (based on the total weight of the monomer mixture) of ethylhexylacrylate and/or butyl acrylate, 0 to 30 % by weight (based on the total weight of the monomer mixture) of methyl acrylate and 3 to 15% by weight (based on the total weight of the monomer mixture) of acrylic acid.

In a particular aspect of the embodiments described in the previous paragraph, the pressure sensitive adhesive layer on the first major side is a pressure sensitive adhesive layer comprising an acrylic polymer obtainable from a polymerization of a mixture of 85 to 95% by weight (based on the total weight of the monomer mixture) of ethylhexylacrylate and/or butyl acrylate, and 5 to 15% by weight (based on the total weight of the monomer mixture) of acrylic acid whereby the acrylic polymer in the pressure sensitive adhesive layer is thermally crosslinked using in particular an epoxycyclohexyl derivative, conveniently without addition of an accelerator for an epoxy curing reaction.

In connection with a particular embodiment of the present method, the painted surface to which the adhesive tape is to be bonded may be primed so as to provide a surface energy thereon of at least 40mN/m as measured at ambient temperature (typically 23°C). In a particular embodiment, the surface energy should be at least 44 mN/m.

In accordance with the present invention, the priming step may be accomplished by a solution of a film forming polymer and / or coupling agent in an organic solvent. Suitable solvents are typically sufficiently volatile to allow evaporation of the solvent or a great part of it while drying the primer after application to the painted surface. They are typically sufficiently inert in order not to react with the components dissolved therein. Typical solvents are polar solvents in particular those that are miscible water for example are miscible with water in an amount of at least 2% by weight or for example at least 5% by weight. Examples of organic solvents include alcohols such as ethanol, methanol or isopropanol, esters, like ethyl acetate or butyl acetate, chlorinated organic solvents, like methylene dichloride or trichloroethylene, ethers, like tetrahydrofuran or dioxane, ether-esters, like methoxybutylacetate, ketones, like acetone, methyl ethyl ketone, methylisobutylketone or diacetonealcohol. A mixture of organic solvents may be used as well including a mixture of polar solvents as well as a mixture of a polar solvent and apolar solvent. In a particular embodiment a mixture of an organic polar solvent and water may be used. The solvent is preferably used in an amount to give a primer solution comprising between 0.1 -10 wt. %, more preferably between 0.1 and 5 wt. %, and especially preferably between 0.1 and 2 wt. % of solids.

In a particular embodiment, the primer solution includes a film forming resin or polymer which is typically dissolved in the solvent of the primer solution. Suitable film-forming resins for use in the preparation of the primer composition include polyacrylate resins, epoxy resins, polyester resins (polymers of a carboxylic acid and glycol), polyvinyl chloride resins, chlorinated rubbers, poly acrylamides and ethylene-vinyl acetate copolymers. The film-forming resin compounds preferably have a molecular weight of from 5,000, more preferably from 10,000, to 30,000 g/mol or more. In an embodiment, the film-forming resin comprises one or more phenoxy resin and/or one or more epoxy resins. The

film-forming resin compound or compounds are typically present in an amount of at least 5 wt. %, for example at least 10 wt. %, or at least 20 wt. % with respect to the solid content of the primer composition. The amount of the film-forming resins preferably does not exceed 95 wt. %, and is preferably 75 wt. % or less.

In a particular embodiment the primer composition further includes a coupling agent either alone or in combination with a film forming resin as described above. Suitable coupling agents include one or more silane, titanate, aluminium or zircoaluminate coupling

agents and which have been disclosed in EP 889105. Appropriate silane coupling agents are conveniently selected from the group of compounds according to formula (I)

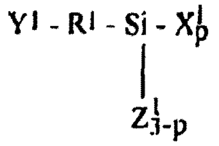

(I)

wherein $X^1$ independently is a hydrolyzable group such as, for example, an alkoxy group (e.g., a methoxy group, an ethoxy group, a 2-methoxyethoxy group or a 2-methoxy-2-ethoxyethoxy group), an acetoxy group or a chlorine atom, $Y^1$ is an organic functional group interacting with the pressure-sensitive adhesive layer of the adhesive tape, for example, a vinyl group, a (meth)acryloyloxy group, epoxy-containing group (e.g., a glycidoxy group, an epoxycyclohexyl group, etc.), a mercapto group, an amino group, an ureido group, a chlorine atom, an imidazolyl group or a cyano group, $Z^1$ is a nonhydrolyzable group such as, for example, an alkyl or aryl group, $R^1$ is a single bond or an alkylene group such as an ethylene or an n-propylene group, and p is 2 or 3.

$X^1$ preferably is methoxy or ethoxy, $Y^1$ preferably is (meth)acryloyloxy or an epoxy-containing group and p preferably is 3. Silane coupling agents which are useful in the present invention include 3-chloropropyltrimethoxysilane, 3-methacryloyloxypropyltrimethoxysilane, 3-glycidoxypropyltrimethoxysilane, 3-mercaptopropyltrimethoxysilane, 3-aminopropyltrimethoxysilane, N-methyl-3-aminopropyltrimethoxysilane, N-(2-aminoethyl)-3-aminopropyltrimethoxysilane, N-[2-(N-2-aminoethyl)aminoethyl]-3-aminopropyltrimethoxysilane, 3-ureidopropyltrimethoxysilane, N-phenyl-3-aminopropyltrimethoxysilane,

3-(4,5-dihydroimidazolyl)propyltrimethoxysilane, 3-aminopropyltris(2-methoxy-2-ethoxyethoxy) silane, N-(2-aminoethyl)-3-aminopropylmethyldimethoxysilane, 3-chloropropylmethyldimethoxysilane, 3-methacryloyloxypropylmethyldimethoxysilane, 3-mercaptopropylmethyldimethoxysilane, 3-glycidoxypropylmethyldimethoxysilane, 3-chloropropylmethyldiethoxysilane, 3-aminopropylmethyldiethoxysilane, 2-(3,4-epoxycyclohexyl)ethyltrimethoxysilane, vinyltrimethoxysilane, vinyltriethoxysilane, 3-chloropropyltriethoxysilane, 3-mercaptopropyltriethoxysilane,

3-aminopropyltriethoxysilane, 3-ureidopropyltriethoxysilane, 3-cyanopropyltriethoxysilane, vinyltris(2-methoxyethoxy)silane, vinyltriacetoxysilane, vinyltrichlorosilane, 3-chloropropylmethyldichlorosilane, octadecyl[3-(trimethoxysilyl)propyl] ammonium chloride, N-[2-(N-vinylbenzyl)aminoethyl]-3-aminopropyltrimethoxysilane hydrochloride, 2-(3,4-epoxy cyclohexyl)ethyl-trimethoxysilane, and 2-(3,4-epoxy cyclohexyl)ethyl-methyl-dimethoxysilane.

Appropriate titanate coupling agents are typically selected from the group of compounds according to formula

$$X^2{}_q\text{-Ti-}Y^2{}_{(4-q)} \qquad \text{(II)}$$

wherein $X^2$ independently is a hydrolyzable group such as, for example, an alkoxy group (e.g., a methoxy group, an ethoxy group, an n-propoxy group, an isopropoxy group, an n-butoxy group, a sec-butoxy group or a tert-butoxy group) or an acetoxy group, or also when q is 2, a group wherein two $X^2$ groups are combined such as, for example, an oxyacetoxy group or an oxyethoxy group, $Y^2$ independently is an organic group interacting with the pressure-sensitive adhesive layer of the adhesive tape such as, for example, an acyloxy group (e.g., a (meth)acryloyoxy group, an octanoloxy group, a lauroyloxy group, an oleoyloxy group, a stearoyloxy group or an isostearoyloxy group), an aryloxy group (e.g., a p-cumylphenoxy group), an arylsulfonyloxy group (e.g., a dodecylbenzenesulfonyloxy group), an alkylphosphonoxy group (e.g, a dioctylphosphonoxy group, a dioctylpyrophosphonoxoy group) or an amino group-containing group (e.g., a 2-N-(2-aminoethyl) aminoethoxy group), and q is 0.5 to 2.

$X^2$ typically is an isopropoxy group, an oxyacetoxy group or an oxyethoxy group.

Titanate coupling agents of formula (II) which are useful in the present invention include isopropyl trioctanoyl titanate, isopropyl triisostearoyl titanate, isopropyl diacryloyl isostearoyl titanate, isopropyl dimethacryloyl isostearoyl titanate, isopropyl tris(dodecylbenzenesulfonyl) titanate, isopropyl tris(p-cumylphenyl) titanate, isopropyl tris[2-N-(2-aminoethyl)aminoethyl] titanate, isopropyl tris(dioctylphosphono) titanate, isopropyl tris(dioctylpyrophosphono) titanate, bis(dioctylpyrophosphono) carbonyl methylene titanate, bis(p-cumylphenyl) carbonyl methylene titanate, diisostearoyl ethylene titanate and bis(dioctylpyrophosphono) ethylene titanate.

Appropriate titanate coupling agents may further be selected from the group of compounds according to following formula (III)

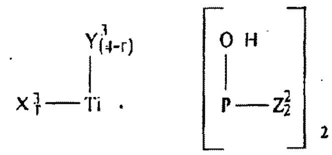

wherein $X^3$ independently is a hydrolyzable group such as, for example, an alkoxy or substituted alkoxy group such as, for example, a methoxy group, an ethoxy group, an n-propoxy group, an isopropoxy group, an n-butoxy group, an isobutoxy group, a sec-butoxy group, a tert-butoxy group, a 2-methoxyethoxy group, a 2-ethoxyethoxy group, a 2-butoxyethoxy group, a 3-methoxypropoxy group, a 2-methoxy-2-ethoxyethoxy group or a 2-methoxy-2-ethoxy-2-ethoxyethoxy group, $Y^3$ independently is an organic group interacting with the pressure-sensitive adhesive layer of the adhesive tape, for example, an alkoxy group or substituted alkoxy group such as, for example, an n-hexyloxy group, a 2-hexyloxy group, an n-octyloxy group, an isooctyloxy group, a tri decyloxy group, a stearyloxy group or a 2,2-diallyoxymethyl-1-butoxy group, an aryloxy group such as, for example, a phenoxy group or a methoxyphenoxy group, a haloalkoxy group or haloaryloxy group such as, for example, a bromomethoxy group, a chloroethoxy group or a chlorophenoxy group, $Z^2$ independently is an alkoxy group such as, for example, a methoxy group, an ethoxy group, an n-propoxy group, an isopropoxy group, an n-butoxy group, an isobutoxy group, a sec-butoxy group, a tert-butoxy group, an n-hexyloxy group, an n-octyloxy group, an isooctyloxy group, a decyloxy group, a lauryloxy group, a tridecyloxy group or a stearyloxy group, a substituted alkoxy group such as, for example, a 2-methoxyethoxy group, a 2-ethoxyethoxy group, a 2-butoxyethoxy group, a 3-methoxypropoxy group, a 2-methoxybutoxy group, a 2-methoxy-2-ethoxyethoxy group or a 2-methoxy-2-ethoxy-2-ethoxyethoxy group, an aryloxy group such as, for example, a phenoxy group, a tolyloxy group, a xylyloxy group, cresyloxy group, a cumylphenoxy group or a methoxyphenoxy group, an aralkyloxy group such as, for example, a benzyloxy group, a haloalkoxy group or haloaryloxy group such as, for example, a bromomethoxy group, a chloroethoxy group, a 3-chloropropoxy group, a 2-chlorotridecyloxy group, a chlorophenoxy group or 2,4-dibromophenoxy group, and r is 0 to 4.

Titanate coupling agents of formula (III) which are useful in the present invention include tetramethyl bis(diphenylphosphite)titanate, tetraethyl bis(dibenzylphosphite)titanate, tetraisopropyl bis(dioctyl phosphite)titanate, tetraisopropyl bis(dilauryl phosphite)titanate, tetraisopropyl bis[di(methoxyphenyl)phosphate]titanate, tetraisopropyl bis[di(cumylphenyl)phosphate]titanate, tetraisobutyl bis(ditolyl phosphite)titanate, tetra-tert-butyl bis(dixylyl phosphite)titanate, tetrahexyl bis(dilauryl phosphite)titanate, tetraoctyl bis(dioctyl phosphite)titanate, tetraoctyl bis(dilauryl phosphite)titanate, tetraoctyl bis(ditridecyl phosphite)titanate, tetraoctyl bis(dicresyl phosphite)titanate, tetra(3-methoxypropyl) bis(dioctylphosphite)titanate, tetra(2-methoxy-2-ethoxyethyl) bis[di(2-chlorotridecyl) phosphite]titanate, tetra(2-methoxy-2-ethoxy-2-ethoxyethyl) bis(dicresylphosphite) titanate, tetra(2-butoxyethyl) bis(di-3-chloropropyl phosphite)titanate, tetra[(2,2-diallyloxymethyl)butyll bis(ditridecyl phosphite)titanate, methyl hexyl(2-ethoxyethyl)isooctyl bis[(2,4-dibromophenyl) n-hexyl phosphiteltitanate, tetraphenyl bis(dibutyl phosphite)titanate, dimethyl diphenyl bis(diisopropylphosphite)titanate, tetra(methoxyphenyl) bis(dibutyl phosphite)titanate, tetra(chloroethyl) bis(octyl decyl phosphite)titanate, tetra(chlorophenyl) bis(dilauryl phosphite)titanate and tetra(bromoethyl) bis[(di(methoxybutyl) phosphite]titanate.

Appropriate aluminium coupling agents are preferably selected from the group of compounds of formula (IV)

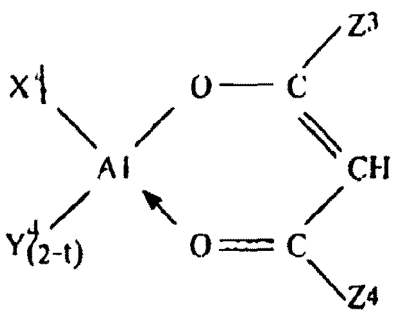

wherein $X^4$ independently is a hydroxyl group or a hydrolyzable group such as, for example, an alkoxy group such as a methoxy group, an ethoxy group, an n-propoxy group, an isopropoxy group, an n-butoxy group, an isobutoxy group, a sec-butoxy group or a tert-butoxy group, $Y^4$ independently is an organic group interacting with the pressure-sensitive adhesive of the adhesive tape such as, for example, an acyloxy group such as, for example, a (meth)acryloyloxy group, an acetacetoxy group, an octanoyloxy group, a lauroyloxy group, an oleoyloxy group, a stearoyloxy group, an isostearoyloxy group or a 1-amino-(N-lauroyloxy)propionyloxy group, an alkoxysulfonyloxy group such as, for example, a lauryloxysulfonyloxy group, an alkylsulfonyloxy group such as, for example, a methylsulfonyloxy group, an arylsulfonyloxy group such as, for example, a dodecylbenzenesulfonyloxy group, an alkylphosphonoxy group such as, for example, a dibutylphosphonoxy group, a diocylphosphonoxy group or a dioctylpyrophosphonoxy group, and t is 0.5 - 2.

$Z^3$ and $Z^4$ are independently selected from a group of substituents comprising, for example, an alkyl group, an aryl group, an alkoxy group, an alkenyloxy group and substituted amino groups.

Aluminium coupling agents of formula (IV) which are useful in the present invention include, for example, diisopropylate aluminium oleylacetoacetate, isopropylate acrylate aluminium oleylacetoacetate, isopropylate acetoactate aluminum oleyl acetoacetate, isopropylate dubutyl phosphate aluminum oleylacetoacetate, isopropylate dibutyl pyrophosphate aluminum oleylacetoacetate, isopropylate dodecylbenzene sulfonate aluminum oleylacetoacetate, and isopropylate lauryl sulfate aluminum oleyl acetoacetate.

Appropriate zircoaluminate coupling agents are preferably selected from the group of compounds of formula V

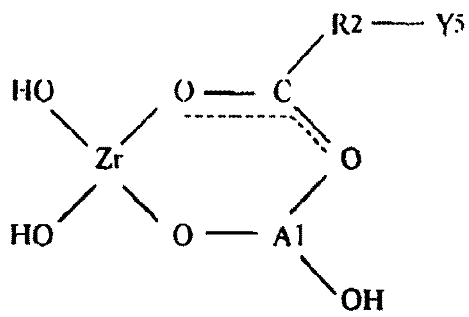

wherein $Y^5$ is an organic group interacting with the pressure-sensitive adhesive layer of the adhesive tape such as, for example, an amino group, a carboxyl group, a (meth)acryloyoxy group, an 1-methylvinyl group, a mercapto group, an acyloxy group and a dodecyl group, and $R^2$ is a single bond or an alkylene group of C1 to C18 such as, for example, an ethylene group, an n-butylene group or an n-dodecylene group.

Zircoaluminate coupling agents of formula (V) which are useful in the present invention include, for example, 2-aminopropionyl zircoaluminate, 2-carboxypropionyl zircoaluminate, myristoyl zircoaluminate, methacryloyl zircoaluminate and 2-mercaptopropionyl zircoaluminate.

The coupling agents useful in the present invention can be prepared by methods described, for example, in Silane Coupling Agents, 2nd ed., New York 1991, edited by Edwin P. Plueddemann, pp. 32-54.

In a particular embodiment, the primer used in the present invention comprises

(i) 5 - 85 % by weight, preferably 10 - 70 % by weight, of one or more silane, titanate, aluminum and/or zircoaluminate coupling agents.

(ii) 90 - 15 % by weight, preferably 90 - 30 % by weight, of one or more film-forming resin compounds as described above, whereby the percentages refer to the sum of components (i) and (ii) and add up to 100% by weight, and

(iii) a volatile inert organic solvent component, preferably in an amount to give a primer solution between 0.1 and 10 wt.% of one or more coupling agents and between 0.1-20 wt.% of one or more film-forming resins whereby the percentages refer to the solids of the primer composition.

The invention is further illustrated by the following examples. These examples are merely for illustrative purposes only and are not meant to be limiting on the scope of the appended claims.

EXAMPLES

**Test Methods**

<u>Static Contact Angle Measurement</u>

Static contact angle measurements are performed using distilled water (Carl Roth GmbH + Co KG, Karlsruhe, Art Nr - 3478.1, EG. Nr. 2317912) and di-iodo methane (Sigma Aldrich, Product No - 158429, CAS - 75-11-6), as dropping liquids. The reference surface tension values of distilled water (Total Surface Tension - 72.80 mN/m, Dispersive Component - 21.80 mN/m, Polar Component - 51.0 mN/m) and di-iodo methane (Total Surface Tension - 50.80 mN/m, Dispersive Component - 50.80 mN/m, Polar Component - 0.0 mN/m) were taken from literature (Ref - G Ström, M

Fredriksson and P. Stenius, Journal of Colloid and Interface Science, Vol 119, No 2, October 1987, Pg 352, Contact angles, work of adhesion and interfacial tensions at dissolving hydrocarbon surface,) The contact angle goniometer used is a contact angle analyzer "OCA-10" (available from Data Physics.). The samples are measured on an open stage of the goniometer at room temperature (23°C ± 2°C). A drop of testing liquid is built on a syringe needle (final volume of distilled water drop is 4 μL and drop is build at the end of the syringe at a rate of 1μl/sec and final volume of di-iodo methane drop is 1.5 μl and the drop is build at the syringe at a rate of 0.5 μl/sec). The drop is then transferred to the sample surface by raising the sample stage as gently as possible, touching the drop to the surface of the sample and then lowering the stage as gently as possible. After 55 seconds of dwell time, the contact angle measurement is started. Automated recording of contact angle data is carried out over a period of 11 seconds (1 data point per second) and final contact angle value is averaged over this 11 second data acquisition period as well as over the left and right contact angle of the drop. The surface energy calculation is then performed using the Owens-Wendt-Rabel-Kaelble method (OWRK Method) as described in D.K. Owens, R.C. Wendt, J. Appl. Polym. Sci, 13 (1969), Pg 1741 (Estimation of the Surface Free Energy of Polymers) and D. H. Kaelble, J. Adhes. 2 (1970) Pg. 66 (Dispersion-Polar surface Tension Properties of Organic Solids).

The Owens-Wendt-Rabel-Kaelble method utilized to measure the surface free energy (SFE) of surfaces and their polar and dispersion parts uses the following equations (1-5).

$$\sigma_s = \sigma_{sl} + \sigma_l . cos\theta \quad (1)$$

$$\sigma_l = \sigma_l^d + \sigma_l^p \quad (2)$$

$$\sigma_s = \sigma_s^d + \sigma_s^p \quad (3)$$

$$\sigma_{sl} = \sigma_s + \sigma_l - 2\left(\sqrt{\sigma_s^d . \sigma_l^d} + \sqrt{\sigma_s^p . \sigma_l^p}\right) \quad (4)$$

Here, $\sigma_s$, $\sigma_l$ are surface energy of the solid surface and surface tension of the liquid used, respectively.σsl is the interfacial tension between the drop and the solid, θ is the contact angle on the solid surface. $\sigma_{sd}$ and $\sigma_{sp}$ stand for the respective contributions of the solid, while σld and σlp represent the disperse and polar parts of the liquid. The values obtained from equations (2-4) are substituted in equation (1). Linear regression method is used to fit the unknown quantities to obtain surface energy of solid surfaces using eq. (5) and summarized in Table 1.

$$\frac{1+cos\theta}{2} . \frac{\sigma_l}{\sqrt{\sigma_l^d}} = \sqrt{\sigma_s^p}\sqrt{\frac{\sigma_l^p}{\sigma_l^d}} + \sqrt{\sigma_s^d} \quad (5)$$

The surface energy value of the sample reported here are the averages of at least 4 separate measurements.

90°-Peel-test at 300 mm/min (according to Test Method, Finat No. 2):

Adhesive tape strips according to the present invention and having a width of 10mm and a length > 175mm are cut out in the machine direction from the sample material.

For test sample preparation the liner is first removed from the one adhesive side and placed on an aluminium strip having the following dimension 22 X 1.6 cm. Then the adhesive coated side of each multilayer PSA film strip is placed, after the liner is removed, with its adhesive side down on a clean test panel using light finger pressure. Next the test samples are rolled twice in each direction with a standard FINAT test roller (weight 6.8 kg) at a speed of approximately 10 mm per second to obtain intimate contact between the adhesive mass and the surface. After applying the adhesive tape strips to the test panel, the test samples are allowed to dwell 72 hours at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The adhesive tape strips are folded back at an angle of 90° and their free ends grasped in the upper jaw of the tensile tester in a configuration commonly utilized

for 90° measurements. The tensile tester is set at 300 mm per minute jaw separation rate. Test results are expressed in Newton per centimeter (N/cm). The quoted peel values are the average of three 90°-peel measurements.

Test samples:

The previously described tests on low surface energy substrates (LSE) are carried out on the following automotive clear coat panels:

UreGloss clear coat coated panels available from BASF Coatings

CeramiClear5 coated panels available from PPG Industries

These clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further co-monomers (e.g. styrene). Panels are cut prior to 90 °peel testing to the requested dimension.

Before 90° peel testing, the Automotive clear coat coated panels are cleaned either with a 1:1 mixture of isopropyl alcohol and distilled water in the case of UreGloss or with n-heptane for the CeramiClear 5 (CC5) clear coat. Cleaning prior to static contact angle measurements is done by wiping both automotive clear coat substrates several times with isopropyl alcohol. After cleaning the test panels are then rubbed dry with a paper tissue.

Products used:

In the examples, the following commercially available products are used:

**GTE6212:** grey acrylic foam tape with AR-7 (transfer tape) laminated on one side of its acrylic foam core , AR-7 being an acrylic adhesive specifically designed for the application on automotive varnishes and lacquers, thickness: 1.2 mm, commercially available by 3M Deutschland GmbH. The foam layer of the foam tape was UV cross-linked.

**EX 4011:** black, double-coated acrylic foam tape, thickness : 1.14 mm, liner covered side coated with JL-2 adhesive, opposing side coated with VR-1 adhesive, optimized for MSE (medium surface energy) and LSE (low surface energy) substrates, commercially available by 3M Deutschland GmbH. The foam layer of the foam tape was UV cross-linked.

**ACX plus 7065:** black, thermally crosslinked, tackified acrylic foam tape, thickness 1.2mm, commercially available by Tesa AG, Hamburg, Germany.

**ACX plus 7074:** black, thermally crosslinked acrylic foam tape, thickness 1 mm, commercially available by Tesa AG, Hamburg, Germany.

Primer 1: isopropyl alcohol based solution of an organic titanate coupling agent.

Primer 2: solution of a polyacrylamide in isopropanol.

Test Results

The increase of the surface energy on the automotive clear coat CeramiClear 5 (CC5), as a result of adding a priming step, is shown in table 1.

Table 1

| Primer used | Surface energy $\gamma$ (mN/m) |
|---|---|
| none | 36.6 |
| Primer 2 | 36.7 |
| Primer 1 | 46.4 |

Results in table 1 clearly show an increase of the surface energy after priming the Cerami Clear 5 substrate

with the Primer 1. No real increase was noted with Primer 2.

The adhesion performance of foamed acrylic foam tapes was then tested by 90° peel tests were run after 20 minutes and 72 hours on two different automotive clear coats. Results are reported in tables 2 and 3 in N/cm.

Table 2: 90° Peel, measured after 20 min dwell time (N/cm)

| | EX 4011 | GTE 6212 | 7065 | 7074 |
|---|---|---|---|---|
| CC5, no primer | 45.4 | 14.4 | 10.2 | 11.4 |
| CC5 with primer 1 | 44.0 | 41.3 | 65.2 | 56.2 |
| CC5 with primer 2 | 43.6 | 27.2 | 35.5 | 26.6 |
| Uregloss, no primer | 44.5 | 9.9 | 10.4 | 5.7 |
| Uregloss with primer 1 | 43.4 | 38.5 | 66.3 | 54.1 |
| Uregloss with primer 2 | 43.6 | 16.4 | 18.6 | 23.2 |

Table 3: 90° Peel, measured after 72h dwell time (N/cm)

| | EX 4011 | GTE 6212 | 7065 | 7074 |
|---|---|---|---|---|
| CC5, no primer | 43.4 | 17.7 | 15.5 | 17.4 |
| CC5 with primer 1 | 41.8 | 39.3 | 78.1 | 53.9 |
| CC5 with primer 2 | 42.1 | 29.5 | 31.2 | 25.6 |
| Uregloss, no primer | 39.9 | 14.8 | 15.1 | 8.3 |
| Uregloss with primer 1 | 40.6 | 41.0 | 86.9 | 53.3 |
| Uregloss with primer 2 | 41.1 | 23.5 | 88.0 | 50.6 |

As can be taken from table 3, the thermally cross-linked acrylic foam tapes 7065 and 7074 in combination with primer 1 or primer 2 achieve a significantly higher adhesion performance than the UV cross-linked acrylic foam tapes.

## Claims

**1.** Method of adhering a part to a painted surface of a body of a vehicle, the method comprising:

- providing an adhesive tape comprising a foam layer having a thermally cross-linked acrylic polymer and having opposite first and second major sides, wherein the surface of the first major side comprises a pressure sensitive adhesive and the surface at the second major side comprising a further adhesive;
- priming the painted surface with a primer comprising a solution of a film forming polymer and or coupling agent in an organic solvent thereby obtaining a primed surface;
- applying the adhesive tape to the primed surface via the pressure sensitive adhesive at the first major side of the adhesive tape; and
- applying a part to the further adhesive at the second major side of the adhesive tape.

**2.** Method according to claim 1 wherein the surface energy after priming is at least 40 mN/m measured at 23°C.

**3.** Method according to claim 1 or 2 wherein the primer comprises one or more silane, titanate, aluminium and/or zircoaluminate coupling agents.

**4.** Method according to any of the previous claims wherein the thermally crosslinked acrylic polymer is obtainable by heating a crosslinking composition comprising a crosslinking agent and an acrylic polymer obtainable by polymerization of a polymerizable composition comprising one or more alkyl acrylates having an average of 3 to 14 carbon atoms in the alkyl group and one or more olefinically unsaturated monomers having a functional group capable of reacting with the crosslinking agent.

**5.** Method according to claim 4 wherein the crosslinking agent comprises an epoxy compound.

**6.** Method according to claim 4 or 5 wherein the one or more olefinically unsaturated monomers comprise an olefinic unsaturated monomer having a functional group selected from hydroxyl, carboxyl, sulfonic acid or phosphonic acid groups, amines, acid anhydrides, epoxides and combinations thereof.

**7.** Method according to any of claims 4 to 6 wherein the one or more olefinic unsaturated monomers comprises an acrylic acid.

**8.** Method according to any of claims 1 to 7 wherein the foam layer comprises a pressure sensitive adhesive layer on the first major side, said pressure sensitive adhesive layer comprising an acrylic polymer.

**9.** Method according to claim 8 wherein said acrylic polymer is thermally crosslinked.

**10.** Method according to any of claims 1 to 9 wherein the further adhesive on the second major side comprises an adhesive layer comprising a heat activatable adhesive or a pressure sensitive adhesive.

**11.** Method according to any of the previous claims wherein said part is applied to said further adhesive of said adhesive tape prior to application of said adhesive tape to the primed surface or after application of adhesive tape to the primed surface.

**12.** Method according to any of the previous claims wherein the part is a rubber seal.

## Patentansprüche

**1.** Verfahren zum Kleben eines Teils auf eine lackierte Oberfläche der Karosserie eines Fahrzeugs, wobei das Verfahren umfasst:

- Bereitstellen eines Klebebands, das eine Schaumschicht mit einem thermisch quervernetzten Acrylpolymer umfasst und einander gegenüberliegende erste und zweite Hauptseiten aufweist, wobei die Oberfläche der ersten Hauptseite ein Haftkleber und die Oberfläche der zweiten Hauptseite einen weiteren Kleber umfasst;
- Grundieren der lackierten Oberfläche mit einer Grundierung, die eine Lösung eines filmbildenden Polymers und/oder Haftverbesserers in einem organischen Lösemittel umfasst, dabei Erzeugen einer grundierten Oberfläche;
- Anbringen des Klebebandes auf der grundierten Oberfläche mittels des Haftklebers auf der ersten Hauptseite des Klebebands; und
- Anbringen eines Teils auf dem weiteren Kleber auf der zweiten Hauptseite des Klebebandes.

**2.** Verfahren nach Anspruch 1, wobei die Oberflächenenergie nach dem Grundieren, gemessen bei 23 °C, mindestens 40 mN/m beträgt.

**3.** Verfahren nach Anspruch 1 oder 2, wobei die Grundierung einen oder mehrere Silan-, Titanat-, Aluminium- und/oder Zirkon-Aluminat-Haftverbesserer umfasst.

**4.** Verfahren nach einem der vorstehenden Ansprüche, wobei das thermisch quervernetzte Acrylpolymer erzeugbar ist durch Erwärmen einer quervernetzenden Zusammensetzung, die ein Vernetzungsmittel und ein Acrylpolymer umfasst, das erzeugbar ist durch Polymerisieren einer polymerisierbaren Zusammensetzung, umfassend ein oder mehrere Alkylacrylate, die durchschnittlich 3 bis 14 Kohlenstoffatome in der Alkylgruppe aufweisen, und ein oder mehrere olefinisch ungesättigte Monomere, die eine funktionale Gruppe aufweisen, die in der Lage ist, mit dem Vernetzungsmittel zu reagieren.

**5.** Verfahren nach Anspruch 4, wobei das Vernetzungsmittel eine Epoxidverbindung umfasst.

**6.** Verfahren nach Anspruch 4 oder 5, wobei das eine oder die mehreren olefinisch ungesättigten Monomere ein olefinisch ungesättigtes Monomer umfassen, das eine funktionelle Gruppe aufweist, die ausgewählt ist aus Hydroxyl-, Carboxyl-, Sulfonsäure- oder Phosphonsäuregruppen, Aminen, Säureanhydriden, Epoxiden oder Kombinationen davon.

7. Verfahren nach einem der Ansprüche 4 bis 6, wobei das eine oder die mehreren olefinisch ungesättigten Monomere eine Acrylsäure umfassen.

8. Verfahren nach einem der Ansprüche 1 bis 7, wobei die Schaumschicht eine Haftkleberschicht auf der ersten Hauptseite umfasst, wobei Haftkleber ein Acrylpolymer umfasst.

9. Verfahren nach Anspruch 8, wobei das Acrylpolymer thermisch quervernetzt ist.

10. Verfahren nach einem der Ansprüche 1 bis 9, wobei der weitere Kleber auf der zweiten Hauptseite eine Klebschicht umfasst, die einen wärmeaktivierbaren Kleber oder einen Haftkleber umfasst.

11. Verfahren nach einem der vorstehenden Ansprüche, wobei das Teil auf den weiteren Kleber des Klebebands vor dem Anbringen des Klebebands auf der grundierten Oberfläche oder nach dem Anbringen des Klebebandes auf der grundierten Oberfläche angebracht wird.

12. Verfahren nach einem der vorstehenden Ansprüche, wobei es sich bei dem Teil um eine Gummidichtung handelt.

## Revendications

1. Procédé permettant de faire adhérer une pièce à une surface peinte d'une carrosserie d'un véhicule, le procédé comprenant :

   - la fourniture d'un ruban adhésif comprenant une couche de mousse comportant un polymère acrylique réticulé thermiquement et ayant des premier et deuxième côtés principaux opposés, dans lequel la surface du premier côté principal comprend un adhésif sensible à la pression et la surface au niveau du deuxième côté principal comprend un adhésif supplémentaire ;
   - l'apprêtage de la surface peinte avec un apprêt comprenant une solution d'un polymère filmogène et/ou d'un agent de couplage dans un solvant organique ce qui permet d'obtenir une surface apprêtée ;
   - l'application du ruban adhésif à la surface apprêtée par l'intermédiaire de l'adhésif sensible à la pression au niveau du premier côté principal du ruban adhésif ; et
   - l'application d'une pièce sur l'adhésif supplémentaire au niveau du deuxième côté principal du ruban adhésif.

2. Procédé selon la revendication 1, dans lequel l'énergie de surface après apprêtage est d'au moins 40 mN/m, mesurée à 23 °C.

3. Procédé selon la revendication 1 ou 2, dans lequel l'apprêt comprend un ou plusieurs agents de couplage de type silane, titanate, aluminium et/ou zircoaluminate.

4. Procédé selon l'une quelconque des revendications précédentes, dans lequel le polymère acrylique réticulé thermiquement peut être obtenu en chauffant une composition de réticulation comprenant un agent de réticulation et un polymère acrylique pouvant être obtenu par polymérisation d'une composition polymérisable comprenant un ou plusieurs acrylates d'alkyle possédant une moyenne de 3 à 14 atomes de carbone dans le groupe alkyle et un ou plusieurs monomères à insaturation oléfinique possédant un groupe fonctionnel susceptible de réagir avec l'agent de réticulation.

5. Procédé selon la revendication 4, dans lequel l'agent de réticulation comprend un composé époxy.

6. Procédé selon la revendication 4 ou 5, dans lequel le ou les monomères à insaturation oléfinique comprennent un monomère oléfinique insaturé possédant un groupe fonctionnel choisi parmi les groupes hydroxyle, carboxyle, acide sulfonique ou acide phosphonique, des amines, des anhydrides d'acide, des époxydes et leurs combinaisons.

7. Procédé selon l'une quelconque des revendications 4 à 6, dans lequel le ou les monomères oléfiniques insaturés comprennent un acide acrylique.

8. Procédé selon l'une quelconque des revendications 1 à 7, dans lequel la couche de mousse comprend une couche d'adhésif sensible à la pression sur le premier côté principal, ladite couche d'adhésif sensible à la pression comprenant un polymère acrylique.

**9.** Procédé selon la revendication 8, dans lequel ledit polymère acrylique est réticulé thermiquement.

**10.** Procédé selon l'une quelconque des revendications 1 à 9, dans lequel l'adhésif supplémentaire sur le deuxième côté principal comprend une couche adhésive comprenant un adhésif pouvant être activé à la chaleur ou un adhésif sensible à la pression.

**11.** Procédé selon l'une quelconque des revendications précédentes, dans lequel ladite pièce est appliquée sur ledit adhésif supplémentaire dudit ruban adhésif avant l'application dudit ruban adhésif sur la surface apprêtée ou après l'application du ruban adhésif sur la surface apprêtée.

**12.** Procédé selon l'une quelconque des revendications précédentes, dans lequel la pièce est un joint en caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008070386 A
- US 6503621 B
- US 4415615 A
- WO 2010101738 A
- WO 2010093886 A
- JP S61113624 A
- EP 0889105 A2
- WO 2012171924 A1
- WO 20120093886 A
- EP 752435 A
- EP 1802722 A
- EP 1791921 A
- EP 1791922 A
- EP 1978069 A
- DE 2008059050
- US 6765078 B2
- US 6720399 B2
- EP 1311555 B1
- EP 0824111 A1
- EP 826698 A1
- EP 824110 A1
- EP 841346 A1
- EP 850957 A1
- US 5945491 A
- US 5854364 A
- US 5789487 A
- WO 00006637 A
- US 20110281964 A1
- US 20120029105 A
- EP 1037952 A
- EP 889105 A


### Non-patent literature cited in the description


- **D. SATAS.** Handbook of Pressure Sensitive Adhesive Technology. 1989, 172
- Glossary of Terms Used in the Pressure Sensitive Tape Industry. *Pressure Sensitive Tape Council,* August 1985
- **D. SATAS.** Handbook of Pressure Sensitive Adhesive Technology. 1989, 173
- *CHEMICAL ABSTRACTS,* 2386-87-0
- **D. SATAS.** Handbook of Pressure Sensitive Adhesive Technology. 1989
- Paint Testing Manual. American society for Testing and Materials
- A Three-DimensionalApproach to Solubility. *Journal of Paint Technology,* vol. 38 (496), 269-280
- Silane Coupling Agents. 1991, 32-54
- *CHEMICAL ABSTRACTS,* 75-11-6
- **G STRÖM ; M FREDRIKSSON ; P. STENIUS.** Contact angles, work of adhesion and interfacial tensions at dissolving hydrocarbon surface. *Journal of Colloid and Interface Science,* October 1987, vol. 119 (2), 352
- **D.K. OWENS ; R.C. WENDT.** Estimation of the Surface Free Energy of Polymers. *J. Appl. Polym. Sci,* 1969, vol. 13, 1741
- **D. H. KAELBLE ; J. ADHES.** *Dispersion-Polar surface Tension Properties of Organic Solids,* 1970, vol. 2, 66